# FASCICULE DE BREVET EUROPEEN

(11) **EP 4 025 782 B1**
(45) Date de publication et mention de la délivrance du brevet: **14.08.2024**
(21) Numéro de dépôt: 20775919.2
(22) Date de dépôt: 03.09.2020
(51) Int. Cl.: F02K 1/72, F02K 1/76

(54) **INVERSEUR DE POUSSÉE MUNI D'UNE CINÉMATIQUE À CÂBLE POUR VOLETS ÉCOPANTS**
SCHUBUMKEHRVORRICHTUNG MIT SEILKINEMATIK FÜR SCHAUFELKLAPPEN
THRUST REVERSER PROVIDED WITH CABLE KINEMATICS FOR SCOOP FLAPS

(30) Priorité: 05.09.2019 FR 1909779
(43) Date de publication de la demande: 13.07.2022
(73) Titulaire: Safran Nacelles, 76700 Gonfreville l'Orcher (FR)
(72) Inventeur: PEYRON, Vincent, 77550 MOISSY CRAMAYEL (FR)
(74) Mandataire: Germain Maureau
(86) Numéro de dépôt international: PCT/FR2020/051525
(87) Numéro de publication internationale: WO 2021/044100

(56) Documents cités:
- WO-A1-2011/073558
- FR-A1- 2 974 150
- US-A- 4 922 712

## Description

L'invention concerne un inverseur de poussée pour un moteur d'un avion.

Un avion est mu par plusieurs turboréacteurs logés chacun dans une nacelle abritant également un ensemble de dispositifs d'actionnement annexes liés à son fonctionnement et assurant diverses fonctions lorsque le turboréacteur est en fonctionnement ou à l'arrêt. Ces dispositifs d'actionnement annexes comprennent notamment un inverseur de poussée. Une nacelle présente généralement une structure tubulaire comprenant une entrée d'air en amont du turboréacteur, une section médiane destinée à entourer une soufflante du turboréacteur, une section aval abritant l'inverseur de poussée et destinée à entourer la chambre de combustion du turboréacteur, et est généralement terminée par une tuyère d'éjection dont la sortie est située en aval du turboréacteur. Les nacelles modernes sont destinées à abriter un turboréacteur double flux apte à générer par l'intermédiaire des pales de la soufflante en rotation un flux d'air chaud (également appelé flux primaire) issu de la chambre de combustion du turboréacteur, et un flux d'air froid (flux secondaire) qui circule à l'extérieur du turboréacteur à travers un passage annulaire, également appelé veine, formé entre un carénage du turboréacteur et une paroi interne de la nacelle. Les deux flux d'air sont éjectés du turboréacteur par l'arrière de la nacelle.

Le rôle d'un inverseur de poussée est, lors de l'atterrissage d'un avion, d'améliorer la capacité de freinage de celui-ci en redirigeant vers l'avant au moins une partie de la poussée générée par le turboréacteur. Dans cette phase, l'inverseur obstrue la veine du flux froid et dirige ce dernier vers l'avant de la nacelle, générant de ce fait une contre-poussée qui vient s'ajouter au freinage des roues de l'avion. Les moyens mis en oeuvre pour réaliser cette réorientation du flux froid varient suivant le type d'inverseur. Cependant, dans tous les cas, l'inverseur comprend des capots mobiles déplaçables entre, d'une part, une position d'ouverture dans laquelle ils ouvrent dans la nacelle un passage destiné au flux dévié, et d'autre part, une position de fermeture dans laquelle ils ferment ce passage. Ces capots peuvent remplir une fonction de déviation ou simplement d'activation d'autres moyens de déviation. Dans le cas d'un inverseur à grilles, la réorientation du flux d'air est effectuée par des grilles de déviation, le capot n'ayant qu'une simple fonction de coulissage visant à découvrir ou recouvrir ces grilles. Des portes de blocage complémentaires, également appelées volets, activées par le coulissement du capotage, permettent généralement une fermeture de la veine en aval des grilles de manière à permettre la réorientation du flux froid vers les grilles.

Ces volets sont montés pivotants sur le capot coulissant entre une position rétractée dans laquelle ils assurent, avec ledit capot mobile, la continuité aérodynamique de la paroi interne de la nacelle et une position déployée dans laquelle, en situation d'inversion de poussée, ils viennent obturer au moins partiellement le canal annulaire en vue de dévier un flux de gaz vers les grilles de déviation découvertes par le coulissement du capot mobile. Le pivotement des volets est guidé par des biellettes rattachées, d'une part, au volet, et d'autre part, à un point fixe du carénage du turboréacteur délimitant le canal annulaire.

Une telle configuration de l'art antérieur présente plusieurs problèmes, à savoir notamment, des problèmes de cinématiques d'ouverture différentes entre la translation du capotage et le pivotement des volets, des problèmes de perturbations aérodynamiques dus aux biellettes d'entraînement traversant la veine, des problèmes de performances acoustiques dus à l'installation de points fixes d'articulation qui réduit la surface de la structure interne pouvant être utilisée pour un traitement acoustique et des problèmes mécaniques du fait de la liaison mécanique par les biellettes entre l'inverseur de poussée et la structure interne.

La problématique de la cinématique du degré d'ouverture des volets par rapport au coulissement du capot et par conséquent, de la gestion de la section totale de passage de l'air est un point particulièrement important. En effet, lors d'une phase de transition entre ouverture et fermeture de l'inverseur de poussée, l'ouverture des volets, en début de phase d'ouverture du capot mobile, est plus rapide que le recul dudit capot. Il existe souvent un point sensible de cinématique qui place le volet en position d'obstruction partielle du canal annulaire sans que la section obstruée soit complètement compensée par la section amont découverte par le recul du capot mobile. La section amont de passage à travers les grilles de l'inverseur étant inférieure à la section de la veine qui est obstruée par les volets, il s'ensuit une augmentation de la pression dans le moteur, ce qui implique une gestion délicate du régime du turboréacteur dans cette phase transitoire. Plusieurs solutions ont été mises en place de manière à résoudre un ou plusieurs de ces problèmes.

Ainsi, il est connu de proposer une architecture d'inverseur ne comprenant plus de bielle traversant le canal annulaire. Par exemple, on peut atteindre cet objectif en prévoyant des bielles d'entraînement articulées sur le volet mobile et reliées à proximité du cadre arrière des grilles de déviation. Or, une telle architecture est inadaptée aux turboréacteurs à fort taux de dilution. En effet, avec ce type de turboréacteur la longueur des grilles et par conséquent, le déplacement du capot vers l'aval de la nacelle pour les découvrir doivent être importants. Or, en raison d'un manque d'espace disponible dans la nacelle, la longueur des bielles ne peut être suffisante pour réaliser une cinématique d'ouverture adaptée pour les volets et le capot. Il s'ensuit que le volet se déploie très rapidement dans le canal annulaire dès le début de la course de recul du capot coulissant entraînant une augmentation conséquente de pression dans le canal annulaire. Il ne résout donc pas le problème de la gestion adéquate de la section totale de passage de l'air dans la nacelle.

Le document FR2974150 A1 décrit un inverseur de poussée selon le préambule de la première revendication.

Les documents US4922712 A et WO 2011/073558 A1 divulguent des inverseurs connus de l'art antérieur.

Par conséquent, il existe un besoin d'amélioration des inverseurs de poussée sans bielle dans le canal annulaire afin de pallier les limitations évoquées précédemment.

Un but de la présente invention est de proposer un inverseur de poussée sans bielle dans le canal annulaire adapté aux turboréacteurs à fort taux de dilution répondant aux problèmes soulevés précédemment.

Un autre but de la présente invention est de proposer un inverseur de poussée sans bielle dans le canal annulaire possédant un système d'entraînement des volets de blocage simple tout en étant fiable.

Un autre but de la présente invention est de proposer un inverseur de poussée sans bielle dans le canal annulaire dans lequel on maîtrise la cinématique d'ouverture des volets et du capot coulissant lors de l'inversion de poussée afin d'assurer une section totale d'échappement toujours suffisante par rapport à la section d'entrée d'air.

Il est également désirable de proposer un inverseur de poussée sans bielle dans le canal annulaire dans lequel la cinématique d'ouverture des volets et du capot est simultanée. Un autre but de la présente invention est de proposer un inverseur de poussée sans bielle dans le canal annulaire dans lequel on limite l'impact du système d'entraînement des volets sur la structure du capot mobile.

A cet effet, selon la revendication 1, l'invention propose un inverseur de poussée pour nacelle de turboréacteur comprenant des moyens de déviation d'au moins une partie d'un flux d'air du turboréacteur, et au moins un capot mobile en translation par rapport à une structure fixe externe de l'inverseur, l'inverseur présentant au moins un volet articulé en rotation, ledit capot mobile étant apte à passer alternativement d'une position de fermeture dans laquelle il assure la continuité aérodynamique de la nacelle avec le volet et couvre les moyens de déviation, le volet étant en position rétractée, à une position d'ouverture dans laquelle il ouvre un passage dans la nacelle et découvre les moyens de déviation, le volet venant obturer une partie d'un canal annulaire de la nacelle.

L'inverseur de poussée est remarquable en ce qu'il comprend un système câble-poulie pour l'entraînement du volet.

L'obturation par le volet d'une partie du canal annulaire de la nacelle permet de diriger vers les moyens de déviation le flux d'air traversant le canal annulaire. Le volet est avantageusement rigide, préférentiellement formé par une paroi pleine. La paroi pleine forme avantageusement une surface aérodynamique.

Grâce à la présente invention, on s'affranchit des bielles d'entraînement de volet mises en place le canal annulaire de la nacelle formant une veine d'air et la cinématique d'ouverture du volet et du capot est maîtrisée afin de présenter une section d'échappement d'air dans la nacelle quasi constante notamment lorsque le dispositif d'inversion de poussée est dans une configuration de début de transit dans laquelle l'ouverture des moyens de déviation par translation du capot mobile est faible.

La structure fixe externe est avantageusement une structure fixe de continuité aérodynamique avec la nacelle en position de fermeture du capot mobile.

De préférence, le système câble-poulie comprend au moins un câble associé à au moins une poulie pour relier le volet à l'inverseur de poussée.

On comprendra qu'une extrémité du câble est reliée au capot mobile et l'autre extrémité du câble est reliée à la structure fixe ou alternativement aux moyens de déviation.

Selon une caractéristique, le système câble-poulie est monté sur l'inverseur de poussée de sorte à tendre le câble lorsque l'inverseur de poussée est en position de fermeture et libérer le câble lorsque l'inverseur de poussée débute sa phase d'ouverture, préférentiellement jusqu'à une position déployée du volet.

On comprend par l'expression « libérer » qu'une tension est libérée sur le câble pour permettre le déploiement progressif du volet.

Le déplacement du capot mobile entre la position d'ouverture et la position de fermeture permet alors d'autoriser progressivement le déploiement ou la rétractation du volet.

Selon une particularité, les extrémités du câble et au moins une poulie de renvoi du système câble-poulie lient ensemble la structure fixe, le capot mobile et le volet. Avantageusement, le câble du système câble-poulie peut être solidaire à une première extrémité de la structure fixe externe et il peut être à l'autre extrémité solidaire du capot mobile.

Selon une caractéristique de l'invention, le volet est articulé à son extrémité aval. Selon une caractéristique, l'inverseur comprend un ressort de torsion du volet, préférentiellement disposé à l'articulation du volet avec le capot.

Selon une autre caractéristique, le capot mobile comprend une butée prévue pour limiter, en cas de rupture du câble, la course du volet à sa position déployée correspondant à la position d'ouverture de l'inverseur.

Préférentiellement, la butée est disposée au niveau de l'articulation du volet avec le capot mobile.

Selon une caractéristique, le volet comprend un organe d'accroche prévu pour s'engager avec un organe de réception de la structure fixe externe et prévu pour guider la course du volet et verrouiller le volet en position rétractée. Ceci permet avantageusement d'éviter toute ouverture intempestive en vol en cas de rupture du câble.

L'organe de réception est avantageusement formé sur la structure fixe externe de l'inverseur de poussée.

L'organe de réception est avantageusement situé à proximité du bord de déviation de la structure fixe externe de l'inverseur de poussée.

L'organe d'accroche peut avantageusement être formé par un guide faisant saillie du volet et l'organe de réception peut être avantageusement formé par une rampe amenant le guide dans une cavité jusqu'à une position finale correspondant à la position rétractée du volet.

La cavité est avantageusement successive à la rampe.

Selon une caractéristique de l'invention, l'organe de réception comprend un ressort de maintien prévu pour plaquer l'organe d'accroche dans la position rétractée du volet. Plus particulièrement, le ressort de maintien est disposé dans la cavité de l'organe de réception.

Le ressort de maintien est avantageusement formé par une lame.

Le maintien de l'organe d'accroche permet de limiter les vibrations du volet dans sa position rétractée et d'empêcher le déploiement du volet en cas de rupture du câble du système câble-poulie.

Ainsi, la rampe permet d'accompagner le déploiement ou la rétractation du volet.

Depuis sa position rétractée, le guide du volet est amené par le déplacement du capot mobile vers la rampe jusqu'à être désolidarisé de cette rampe. Le volet tenu par le câble du système poulie-câble est alors progressivement libéré dans la veine. Le déploiement du volet dans la veine est accompagné par le flux d'air présent dans la veine.

Un volet dont le déploiement est accompagné par le flux d'air de la veine est dit écopant.

Dans certains cas, il peut arriver que le déploiement du volet dans la veine soit empêché par une pression différentielle plus importante sur la paroi du volet qui forme le canal annulaire.

Dans ce dernier cas, l'organe de réception peut comprendre, outre la rampe, dite première rampe, une deuxième rampe. La deuxième rampe est avantageusement distincte de la première rampe.

L'organe de réception est alors avantageusement successivement formé de la première rampe, de la cavité, puis de la deuxième rampe.

Depuis sa position rétractée, en cas de déploiement du volet dans la veine, le guide du volet est amené par le déplacement du capot mobile vers la deuxième rampe. La deuxième rampe permet alors d'écarter le volet de la structure fixe externe pour permettre à l'air de la veine de venir pousser sur la surface externe du volet jusqu'à ce que le guide soit désolidarisé de cette rampe. Le volet tenu par le câble du système poulie-câble est alors progressivement libéré dans la veine. Le déploiement du volet dans la veine est accompagné par le flux d'air présent dans la veine.

Selon une caractéristique de l'invention, l'inverseur de poussée comprend un tendeur solidaire de la structure fixe externe et prévu pour mettre le câble du système câble-poulie en tension lorsque le volet est en position rétractée et pour libérer la tension qu'il exerce sur le câble lorsque le volet débute son déploiement.

Le tendeur est alors disposé sur le chemin du câble de sorte qu'il soit en contact avec le câble lorsque le volet est en position rétractée et qu'il ne soit plus en contact avec le câble lorsque le volet débute son déploiement.

Le tendeur est avantageusement un galet-tendeur appuyé sur le câble et poussé par un ressort élastique.

Selon un mode de réalisation, les moyens de déviation sont des moyens de déviation mobiles avec le capot mobile, tels que des grilles de déviation mobiles.

Lorsque les moyens de déviation sont des moyens de déviation mobiles, le volet peut être articulé en rotation par rapport au capot mobile.

En d'autres termes, ces moyens de déviation mobiles ou grilles de déviation mobiles sont solidaires du capot mobile. Ainsi, ces moyens de déviation mobiles translatent avec le capot mobile.

Selon une variante de l'invention, le câble passe par une première poulie de renvoi et une deuxième poulie de renvoi respectivement montée solidaire aux extrémités amont et aval des moyens de déviation mobiles, et le câble passant en outre dans une troisième poulie de renvoi solidaire du volet.

Selon un autre mode de réalisation, les moyens de déviation sont des moyens de déviation fixes par rapport à la structure fixe externe, tels que des grilles de déviation fixes.

Lorsque les moyens de déviation sont des moyens de déviation fixes, le volet peut être articulé en rotation soit par rapport au capot mobile, ou soit par rapport à la structure fixe externe.

Lorsque les moyens de déviation sont des moyens de déviation fixes et lorsque le volet est articulé en rotation par rapport à la structure fixe externe :
- selon une première variante de réalisation, le câble est relié à une première extrémité à l'aval des moyens de déviation et à une deuxième extrémité au capot mobile, et le câble passe par une première poulie de renvoi et une deuxième poulie de renvoi respectivement montée solidaire de l'extrémité amont du capot mobile, et de l'extrémité amont du volet .
- selon une deuxième variante de réalisation :
- le volet est articulé en rotation par rapport à la structure fixe externe,
- le câble est relié à une première extrémité à l'amont des moyens de déviation et à une deuxième extrémité au capot mobile,
- le câble passe par une première poulie de renvoi et une deuxième poulie de renvoi respectivement montée solidaire de l'extrémité amont et aval des moyens de déviation, et le câble passant en outre dans une troisième poulie de renvoi solidaire du volet.

Selon une variante de réalisation de l'invention, la portion du câble traversant les moyens de déviation passe par une gaine rigide solidaire de ces moyens de déviation. Une tel gaine permet d'éviter la mise en vibration de cette portion de câble lorsque le flux d'air dévié parcourt ces moyens de déviation.

Selon un autre aspect, l'invention concerne une nacelle d'un aéronef équipé d'un inverseur de poussée tel que décrit dans la présente invention.

D'autres aspects, buts et avantages de l'invention apparaîtront à la lecture de la description détaillée suivante de formes de réalisation préférées de celle-ci, donnée à titre d'exemple non limitatif et faite en référence aux dessins annexés sur lesquels :
La figure 1 illustre une vue schématique d'une section d'une nacelle,
La figure 2A illustre une vue schématique d'une section d'un inverseur de poussée équipé d'un système câble-poulie selon un premier mode de réalisation représenté dans une position de fermeture,
La figure 2B illustre une vue schématique de la section de l'inverseur de poussée de la figure 2A représenté dans une position de transit,
La figure 2C illustre une vue schématique de la section de l'inverseur de poussée de la figure 2A dans une position d'ouverture,
La figure 3A illustre une vue schématique d'un bord de déviation d'une structure fixe externe de l'inverseur équipé d'un organe de réception recevant un organe d'accroche d'un volet, représenté dans une position de fermeture de l'inverseur,
La figure 3B illustre le volet de la figure 3A dans une position de transit de l'inverseur,
La figure 4A illustre une vue schématique d'un mode de réalisation de l'organe de réception recevant l'organe d'accroche du volet, représenté dans une première position de déploiement de l'inverseur,
La figure 4B illustre l'inverseur de poussée de la figure 4A, représenté dans une deuxième position de déploiement de l'inverseur,
La figure 4C illustre l'inverseur de poussée des figures 4A et 4B, représenté dans une troisième position de déploiement de l'inverseur,
La figure 5A illustre un tendeur mettant en tension le câble du système câble-poulie,
La figure 5B illustre le tendeur de la figure 5A libérant la tension du câble du système câble-poulie,
La figure 6 illustre une butée disposée sur le capot mobile pour limiter la course du volet en cas de rupture du câble,
La figure 7A illustre une vue schématique d'une section d'un inverseur de poussée équipé d'un système câble-poulie selon un deuxième mode de réalisation représenté dans une position de fermeture,
La figure 7B illustre une vue schématique de la section de l'inverseur de poussée de la figure 7A représenté dans une position de transit,
La figure 7C illustre une vue schématique de la section de l'inverseur de poussée de la figure 7A dans une position d'ouverture,
La figure 8A illustre une vue schématique d'une section d'un inverseur de poussée équipé d'un système câble-poulie selon un troisième mode de réalisation représenté dans une position de fermeture,
La figure 8B illustre une vue schématique de la section de l'inverseur de poussée de la figure 8A représenté dans une position de transit,
La figure 8C illustre une vue schématique de la section de l'inverseur de poussée de la figure 8A dans une position d'ouverture.

Les expressions « amont » et « aval » se réfèrent au sens du flux d'air traversant la veine d'air.

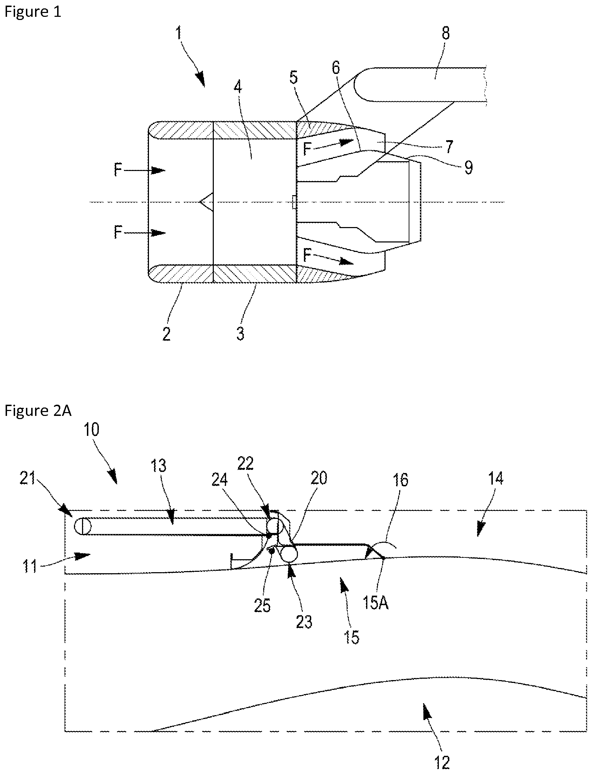

En référence à la figure 1, une nacelle 1 comprend une section amont 2 avec une lèvre d'entrée d'air, une section médiane 3 entourant une soufflante 4 d'un moteur tel qu'un turboréacteur 6 double flux et une section aval 5 abritant un inverseur de poussée, la nacelle servant à canaliser les flux d'air générés par le moteur.

L'entrée d'air permet la captation optimale vers le turboréacteur de l'air nécessaire à l'alimentation de la soufflante et des compresseurs internes du turboréacteur.

La section aval 5 comprend quant à elle une structure interne (encore appelée « inner fixed structure » ou « IFS ») entourant la partie amont du turboréacteur, une structure externe (encore appelée « outer fixed structure » ou « OFS ») et un capot mobile 14 comportant des moyens d'inversion de poussée. La structure interne ou IFS ainsi que la structure externe ou OFS sont fixes par rapport au capot mobile 14.

L'IFS et l'OFS délimitent une veine 7 permettant le passage d'un flux d'air F pénétrant la nacelle 1 au niveau de la lèvre d'entrée d'air.

La nacelle 1 est prévue pour recevoir un pylône d'attache 8 permettant de fixer ladite nacelle 1 et le turboréacteur 6 à une aile de l'aéronef de façon suspendue.

La nacelle 1 se termine par une tuyère d'éjection 9.

Aux figure 2A à 2C, on a représenté partiellement un inverseur de poussée 10 selon un premier mode de réalisation de l'invention. Plus particulièrement, dans ces figures on a représenté, la structure externe fixe 11 de l'inverseur 10 et la structure interne fixe 12 de l'inverseur 10.

La structure externe fixe 11 est de continuité aérodynamique avec le carénage de la nacelle, alors que la structure interne fixe 12 est de continuité aérodynamique avec le carénage du turboréacteur.

L'inverseur de poussée 10 pour nacelle de turboréacteur comprenant des moyens de déviation 13 du flux d'air du turboréacteur, telles que des grilles de déviation 13.

Le capot mobile 14 est prévu en translation par rapport à la structure fixe externe 11 de l'inverseur 10, l'inverseur 10 présentant au moins un volet 15 articulé en rotation sur le capot mobile 14, ledit capot mobile 14 étant apte à passer alternativement d'une position de fermeture dans laquelle il assure la continuité aérodynamique de la nacelle 1 avec le volet 15 et couvre les moyens de déviation 13, le volet 15 étant en position rétractée, à une position d'ouverture dans laquelle il ouvre un passage dans la nacelle 1 et découvre les moyens de déviation 13, le volet venant obturer une partie d'un canal annulaire de la nacelle.

Tel que représenté, les moyens de déviation sont des grilles de déviation mobiles 13 avec le capot mobile 14.

Selon l'invention, l'inverseur de poussée 10 comprend un système câble-poulie 20-25 pour l'entraînement du volet 15.

Plus particulièrement, dans l'exemple illustré, le système câble-poulie 20-25 comprend un câble 20 associé à trois poulies 21-23 pour relier le volet 15 à l'inverseur de poussée 1.

La câble 20 est relié à une première extrémité 24 à la structure externe fixe 11 et à une deuxième extrémité 25 au capot mobile 14.

Le câble 20 passe par une première poulie de renvoi 21 et une deuxième poulie de renvoi 22 respectivement montées solidaires aux extrémités amont et aval des moyens de déviation mobiles 13, et le câble 20 passant en outre dans une troisième poulie de renvoi 23 solidaire du volet 15.

La figure 2A illustre une position de fermeture de l'inverseur 1 dans lequel le volet 15 est rétracté, le câble 20 est alors mis en tension par la différence linéaire du câble 20 entre la première extrémité 24 et la poulie de renvoi aval 22.

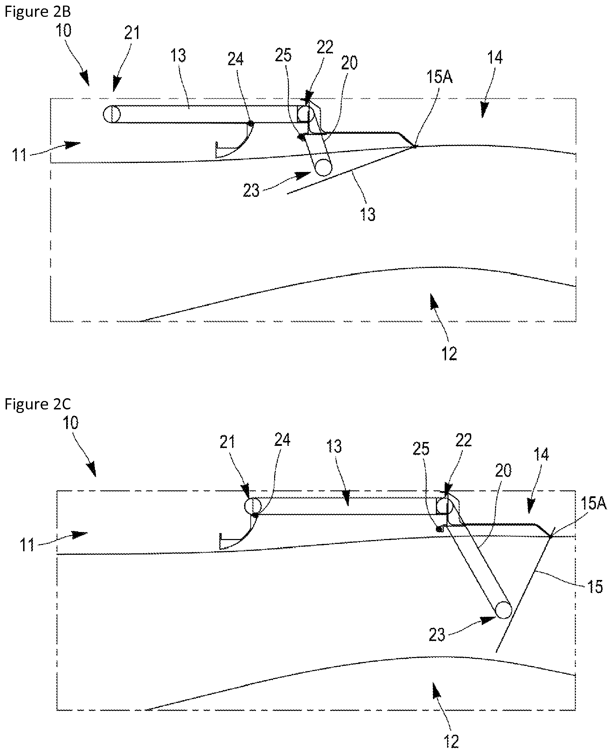

Dans les figures 2B et 2C, l'inverseur de poussée 10 débute sa phase d'ouverture. Le capot mobile 14 coulisse par rapport à la structure externe fixe 11 de l'inverseur 10. Le coulissement du capot mobile 14 entraîne alors le déplacement des moyens de déviation 13 ou grilles de déviation 13 solidaires du capot mobiles 14. Le déplacement des moyens de déviation 13 permet alors de rapprocher progressivement la poulie de renvoi amont 21 de la première extrémité 24 du câble 20 solidaire de la structure externe fixe 11.

Ce rapprochement progressif de la poulie de renvoi amont 21 et de la première extrémité 24 permet de libérer la tension initialement appliquée au câble 20 entre la première extrémité 24 du câble 20 et la poulie de renvoi aval 22.

Le volet 15 commence alors sa phase de déploiement en venant obstruer progressivement la veine d'air.

Le déploiement du volet 15 est favorisé par le flux d'air traversant la veine d'air et pénétrant un espace formé entre la volet 15 et le capot mobile 14 durant le déploiement du volet 15.

A la figure 2A, on a représenté un ressort de torsion 16 du volet 15 peut être disposé à l'articulation 15A du volet 15 avec le capot mobile 14.

Ce ressort de torsion 16 est préférentiellement dimensionné de sorte qu'il permet le déploiement complet du volet 15 sans flux d'air traversant la veine d'air.

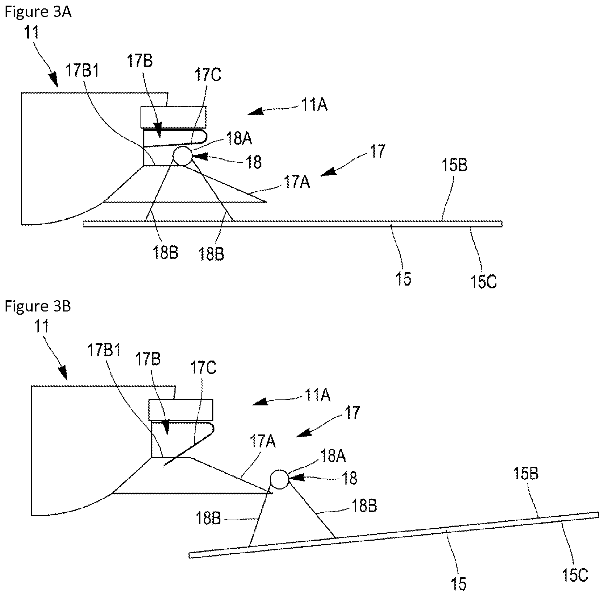

Aux figures 3A et 3B, on a représenté la partie aval de la structure externe fixe 11 formant un bord de déviation lorsque l'inverseur est en position d'ouverture.

La partie aval 11A de la structure externe fixe 11 comprend un organe de réception 17 prévu pour guider un organe d'accroche 18.

L'organe de réception 17 est avantageusement formé sur la partie amont de la structure fixe externe 11 de l'inverseur de poussée 10.

Dans l'exemple illustré, l'organe de réception 17 est formé successivement d'une rampe 17A jointe à une portion droite 17B1 d'une cavité 17B.

La cavité 17B forme avantageusement une butée angulaire de fin de course du volet depuis la position déployée vers la position rétractée.

Le volet 15 comprend une surface aérodynamique 15C qui forme le canal annulaire et une surface externe 15B non-exposée au flux d'air F quand le volet est en position rétractée.

Tel que représenté, l'organe d'accroche 18 est disposé sur la surface externe 15B du volet 15. L'organe d'accroche 18 est formé d'un guide 18A faisant saillie de la surface externe 15B. Plus particulièrement, le guide 18A est porté par des bras 18B en saillie de la surface externe 15B.

La rampe 17A permet avantageusement de faciliter la saisie du volet 15 par l'intermédiaire de l'organe d'accroche18 lorsque l'inverseur de poussée 10 passe de sa position d'ouverture vers sa position fermeture. Le guide 18A du volet 15 saisi est alors amené jusqu'à la cavité 17B.

La rampe 17A permet également de libérer progressivement le volet 15 en participant au premier pourcentage du début de la phase de transit de l'inverseur 10. On évite alors une variation brusque de la section de la veine d'air dans cette phase de début de transit. Le volet 15 tenu par le câble 20 du système poulie-câble 20-25 est alors progressivement libéré dans la veine. Le déploiement du volet 15 dans la veine est accompagné par le flux d'air présent dans la veine tel que décrit précédemment. L'organe de réception 17 comprend en outre un ressort de maintien 17C du guide 18A. le ressort de maintien 17C est ici formé ici par une lame. Le ressort de maintien 17C est disposé dans la cavité 17 de l'organe de réception 17.

Le maintien de l'organe d'accroche 18 permet principalement d'empêcher le déploiement du volet 15 en cas de rupture du câble 20 du système câble-poulie 20-25.

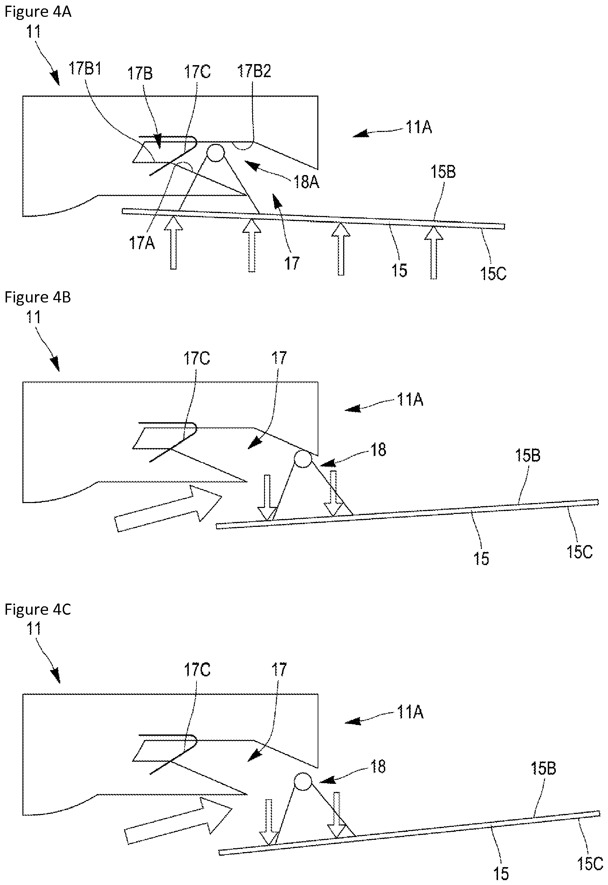

Les figures 4A à 4C, illustrent un mode de réalisation de l'invention prévu pour faciliter le déploiement du volet 15 dans la veine lorsque son déploiement est empêché par une pression différentielle plus importante sur la surface aérodynamique 15C du volet 15. Dans ce cas l'invention prévoit que l'organe de réception comprend, outre la rampe 17A, dite première rampe 17A, une deuxième rampe 17C. La deuxième rampe 17C est avantageusement distincte de la première rampe17A.

Selon ce dernier mode de réalisation, l'organe de réception 17 est alors successivement formé de la première rampe 17A, de la cavité 17B, puis de la deuxième rampe 17C.

La deuxième rampe 17C est en regard de la première rampe 17A. Selon une particularité, une deuxième portion droite 17B2 de la cavité 17B opposée à la première portion 17B1 peut être de longueur linéaire supérieure à la première portion droite 17B1.

Depuis sa position rétractée, en cas d'empêchement de déploiement du volet 15 dans la veine du fait que le volet 15 reste plaqué par pression plus importante sur la surface aérodynamique 15C du volet 15, le guide 18A du volet est amené par le déplacement du capot mobile 14 vers la deuxième rampe 17C. La deuxième rampe 17C permet alors d'écarter le volet 15 de la structure fixe externe 11 pour permettre à l'air de la veine de venir pousser sur la surface externe 15B du volet 15 jusqu'à ce que le guide 18A soit désolidarisé de cette rampe 17C. Le volet 15 tenu par le câble du système poulie-câble 20-25 est alors progressivement libéré dans la veine. Le déploiement du volet 15 dans la veine est accompagné par le flux d'air présent dans la veine tel que cela est illustré aux figure 4A à 4C.

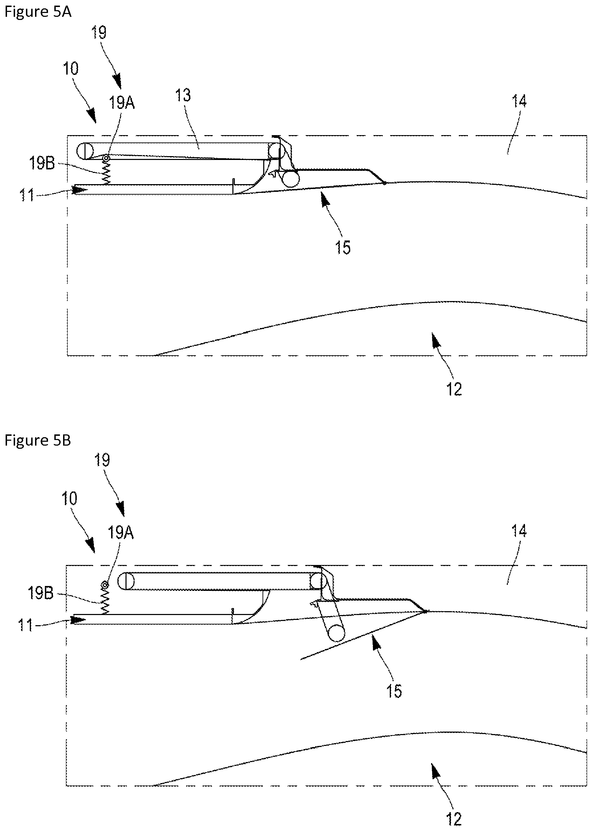

Aux figures 5A et 5B, on a représenté l'inverseur de poussée 10, celui-ci comprenant un tendeur 19 solidaire de la structure fixe externe 11 et prévu pour mettre le câble 20 du système câble-poulie 20-25 en tension lorsque le volet 15 est en position rétractée et pour libérer la tension qu'il exerce sur le câble 20 lorsque le volet 15 débute son déploiement.

Tel que représenté, le tendeur 19 est disposé fixé à la structure fixe externe 11 sur le chemin du câble 20 de sorte qu'il soit en contact avec le câble 20 lorsque le volet 15 est en position rétractée et qu'il ne soit plus en contact avec le câble 20 lorsque le volet débute son déploiement.

Tel que représenté, le tendeur 19 est un galet-tendeur 19A appuyé sur le câble 20 et poussé par un ressort élastique 19B.

Le tendeur 19 met avantageusement en tension une portion du câble comprise entre la première poulie de renvoi amont 21 et la deuxième poulie de renvoi aval 22.

Un tel tendeur 19 permet le maintien tendu du câble en position de fermeture de l'inverseur de sorte que la position rétractée du volet 15 soit maintenu fixe et que le câble ne vibre pas.

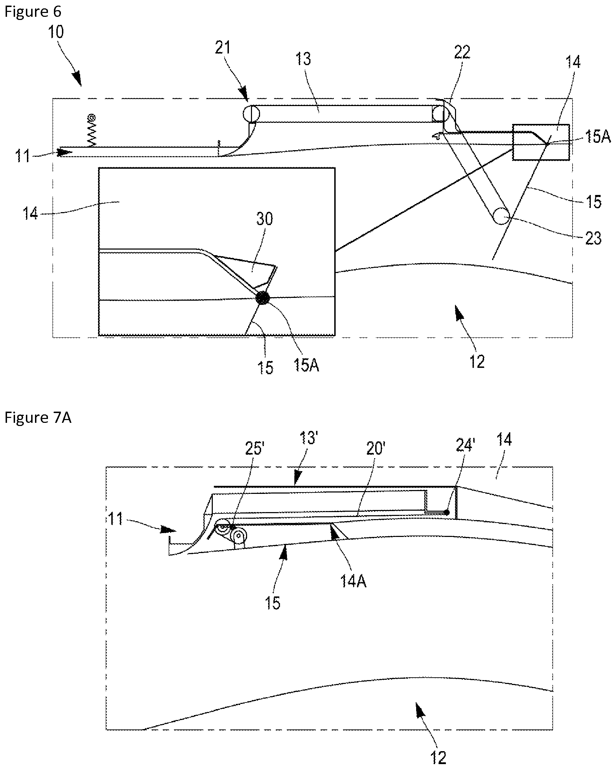

A la figure 6, on a représenté une butée 30 prévue, en cas de rupture du câble pendant la phase d'inversion de poussée, pour limiter la course du volet 15 à sa position déployée correspondant à la position d'ouverture de l'inverseur.

Préférentiellement, la butée 30 est disposée au niveau de l'articulation 15A du volet 15 avec le capot mobile 14. La butée est ici portée par le capot mobile 14.

Dans un deuxième mode de réalisation représenté aux figures 7A à 7C, les moyens de déviation 13' sont fixes par rapport à la structure fixe externe 11, tels que des grilles de déviation 13' fixes.

Dans ce deuxième mode de réalisation, le volet 15 est également articulé en rotation par rapport au capot mobile 14.

Selon ce deuxième mode de réalisation, un système câble-poulie 20'-25' pour l'entraînement du volet 15 est prévu pour être associé à des moyens de déviation 13' fixes.

Plus particulièrement, dans l'exemple illustré, le système câble-poulie 20'-25' comprend un câble 20' associé à deux poulies 21'-22' pour relier le volet 15 à l'inverseur de poussée 1.

Le câble 20' est ici relié à une première extrémité 24' à l'aval des moyens de déviation 13' et à une deuxième extrémité 25' au capot mobile 14, plus particulièrement le câble 20' est relié à sa deuxième extrémité 25' à l'amont d'une virole acoustique 14A du capot mobile 14.

Le câble 20' passe par une première poulie de renvoi 21' et une deuxième poulie de renvoi 22' respectivement montée solidaire de l'extrémité amont du capot mobile 14, ici l'amont de la virole acoustique 14A, et de l'extrémité amont du volet 15.

La figure 7A illustre une position de fermeture de l'inverseur 1 dans lequel le volet 15 est rétracté, le câble 20' est alors mis en tension par la différence linéaire du câble 20' entre la première extrémité 24' et la poulie de renvoi 21' solidaire de l'extrémité amont du capot 14.

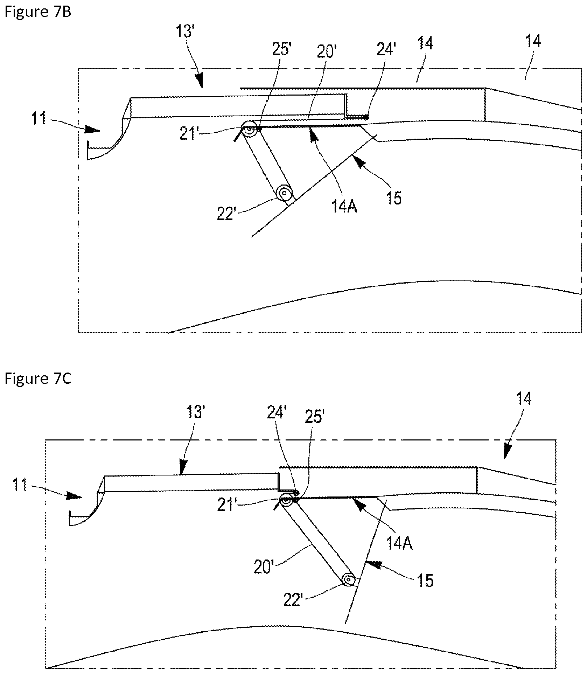

Dans les figures 7B et 7C, l'inverseur de poussée 10 débute sa phase d'ouverture. Le capot mobile 14 coulisse par rapport à la structure externe fixe 11 de l'inverseur 10. Les moyens de déviation 13' ou grilles de déviation 13' solidaires de la structure fixe externe 11 reste fixes. Le déplacement du capot mobile 14 permet alors de rapprocher progressivement la poulie de renvoi 21' solidaire de l'extrémité amont du capot 14 de la première extrémité 24' du câble 20' solidaire de l'aval des moyens de déviation 13'. Ce rapprochement progressif de la poulie de renvoi 21' solidaire de l'extrémité amont du capot 14 et de la première extrémité 24' permet de libérer la tension initialement appliquée au câble 20' entre la première extrémité 24' du câble 20' et la poulie de renvoi 21' solidaire de l'extrémité amont du capot 14.

Le volet 15 commence alors sa phase de déploiement en venant obstruer progressivement la veine d'air.

De la même manière que dans le premier mode de réalisation, le déploiement du volet 15 est favorisé par le flux d'air traversant la veine d'air et pénétrant un espace formé entre la volet 15 et le capot mobile 14 durant le déploiement du volet 15.

Les variantes de réalisation décrites en référence au premier mode de réalisation sont bien entendus applicables au deuxième mode de réalisation sans sortir du cadre du deuxième mode de réalisation.

Dans le cas de la variante de réalisation en référence à la figure 5, le tendeur 19 peut être solidaire des moyens de déviation 13' et prévu pour mettre le câble 20' du système câble-poulie 20'-25' en tension lorsque le volet 15 est en position rétractée et pour libérer la tension qu'il exerce sur le câble 20' lorsque le volet 15 débute son déploiement.

Par exemple, le tendeur 19 met avantageusement en tension une portion du câble comprise entre la première poulie de renvoi 21' et la première extrémité 24' du câble 20' solidaire de l'aval des moyens de déviation 13'.

Un tel tendeur 19 permet le maintien tendu du câble en position de fermeture de l'inverseur de sorte que la position rétractée du volet 15 soit maintenu fixe et que le câble ne vibre pas.

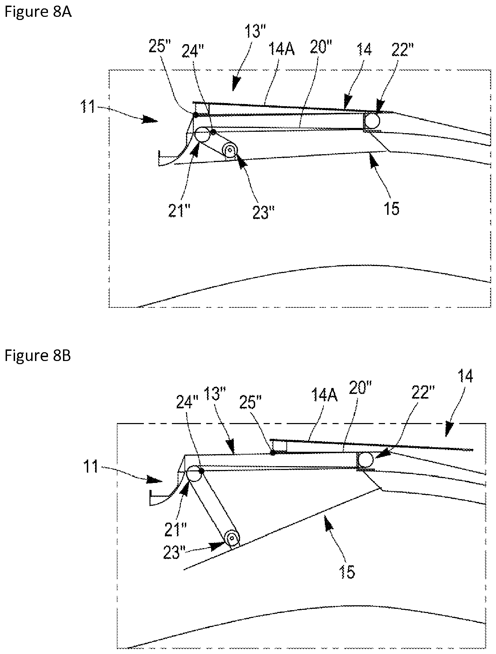

Dans un troisième mode de réalisation représenté aux figures 8A à 8C, les moyens de déviation 13" sont également fixes par rapport à la structure fixe externe 11, tels que des grilles de déviation 13" fixes.

Dans ce troisième mode de réalisation, le volet 15 est articulé en rotation par rapport à la structure fixe externe 11.

Selon ce troisième mode de réalisation, le système câble-poulie 20"-25" comprend un câble 20" associé à trois poulies 21"-23" pour relier le volet 15 à l'inverseur de poussée 1.

Le câble 20" est ici relié à une première extrémité 24" à l'amont des moyens de déviation 13" et à une deuxième extrémité 25" au capot mobile 14, plus particulièrement le câble 20" est relié à sa deuxième extrémité 25" à l'amont d'une virole acoustique 14A du capot mobile 14.

Le câble 20" passe par une première poulie de renvoi 21" et une deuxième poulie de renvoi 22" respectivement montée solidaire de l'extrémité amont et aval des moyens de déviation 13", et le câble 20" passant en outre dans une troisième poulie de renvoi 23" solidaire du volet 15.

La figure 8A illustre une position de fermeture de l'inverseur 1 dans lequel le volet 15 est rétracté, le câble 20" est alors mis en tension par la différence linéaire du câble 20" entre la deuxième extrémité 25" et la deuxième poulie de renvoi 22" solidaire de l'extrémité aval des moyens de déviation 13".

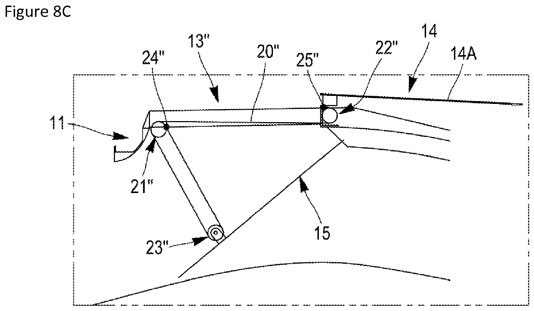

Dans les figures 8B et 8C, l'inverseur de poussée 10 débute sa phase d'ouverture. Le capot mobile 14 coulisse par rapport à la structure externe fixe 11 de l'inverseur 10. Les moyens de déviation 13" ou grilles de déviation 13" solidaires de la structure fixe externe 11 reste fixes. Le déplacement du capot mobile 14 permet alors de rapprocher progressivement la deuxième extrémité 25" du câble 20" solidaire de l'amont de la virole acoustique 14A de la deuxième poulie de renvoi 22" solidaire de l'extrémité aval des moyens de déviation 13".

Ce rapprochement progressif de la deuxième extrémité 25" du câble 20" vers la deuxième poulie de renvoi 22" permet de libérer la tension initialement appliquée au câble 20"augmenttant la longueur de câble entre la première poulie 21" et la troisième poulie 23". Le volet 15 commence alors sa phase de déploiement en venant obstruer progressivement la veine d'air.

De la même manière que dans le premier mode de réalisation, le déploiement du volet 15 est favorisé par le flux d'air traversant la veine d'air et pénétrant un espace formé entre la volet 15 et le capot mobile 14 durant le déploiement du volet 15.

Les variantes de réalisation décrites en référence au deuxième mode de réalisation sont bien entendus applicables au deuxième mode de réalisation sans sortir du cadre du troisième mode de réalisation.

Bien évidemment, l'invention n'est pas limitée aux exemples qui viennent d'être décrits et de nombreux aménagements peuvent être apportés à ces exemples sans sortir du cadre de l'invention. Notamment, les différentes caractéristiques, formes, variantes et modes de réalisation de l'invention peuvent être associés les uns avec les autres selon diverses combinaisons dans la mesure où ils ne sont pas incompatibles ou exclusifs les uns des autres.

## Revendications

1. Inverseur de poussée (10) pour nacelle (1) de turboréacteur comprenant des moyens de déviation (13 ; 13' ; 13") d'au moins une partie d'un flux d'air (F) du turboréacteur, et au moins un capot mobile (14) en translation par rapport à une structure fixe externe (11) de l'inverseur, l'inverseur présentant au moins un volet (15) articulé en rotation, ledit capot mobile (14) étant apte à passer alternativement d'une position de fermeture dans laquelle il assure la continuité aérodynamique de la nacelle (1) avec le volet (15) et couvre les moyens de déviation (13 ; 13' ; 13"), le volet (15) étant en position rétractée, à une position d'ouverture dans laquelle il ouvre un passage dans la nacelle (1) et découvre les moyens de déviation (13 ; 13' ; 13"), le volet (15) venant obturer une partie d'un canal annulaire (7) de la nacelle (1), **caractérisé en ce qu'**il comprend un système câble-poulie (20-25 ; 20'-25' ; 20"-25") pour l'entraînement du volet (15),
le système câble-poulie (20-25 ; 20'-25' ; 20"-25") comprenant au moins un câble (20 ; 20' ; 20") associé à au moins une poulie (21-23; 21'-22' ; 21"-23") pour relier le volet (15) à l'inverseur de poussée (10).

2. Inverseur de poussée (10) selon la revendication précédente, **caractérisé en ce que** le système câble-poulie (20-25; 20'-25' ; 20"-25") est monté sur l'inverseur de poussée (10) de sorte à tendre le câble (20 ; 20' ; 20") lorsque l'inverseur de poussée (10) est en position de fermeture et libérer le câble (20 ; 20' ; 20") lorsque l'inverseur de poussée (10) débute sa phase d'ouverture, préférentiellement jusqu'à une position déployée du volet (15).

3. Inverseur de poussée (10) selon l'une quelconque des revendications précédentes, **caractérisé en ce que** les extrémités (24-25 ; 24'-25' ; 24"-25") du câble (20 ; 20' ; 20") et au moins une poulie de renvoi (21-23; 21'-22' ; 21"-23") du système câble-poulie (20-25; 20'-25' ; 20"-25") lient ensemble la structure fixe (11), le capot mobile (14) et le volet (15).

4. Inverseur de poussée (10) selon l'une quelconque des revendications précédentes, **caractérisé en ce que** le câble (20) du système câble-poulie (20-25) est solidaire à une première extrémité (24 ; 24' ; 24") de la structure fixe externe (11) et il est à l'autre extrémité (25 ; 25' ; 25") solidaire du capot mobile (14).

5. Inverseur de poussée (10) selon l'une quelconque des revendications précédentes, **caractérisé en ce que** le volet (15) est articulé à son extrémité aval.

6. Inverseur de poussée (10) selon l'une quelconque des revendications précédentes, **caractérisé en ce qu'**il comprend un ressort de torsion (16) du volet (15), préférentiellement disposé à l'articulation du volet (15) avec le capot (14).

7. Inverseur de poussée (10) selon l'une quelconque des revendications précédentes, **caractérisé en ce que** le capot mobile (14) comprend une butée (30) prévue pour limiter la course du volet (15) à sa position déployée correspondant à la position d'ouverture de l'inverseur (10).

8. Inverseur de poussée (10) selon l'une quelconque des revendications précédentes, **caractérisé en ce que** le volet (15) comprend un organe d'accroche (18) prévu pour s'engager avec un organe de réception (17) de la structure fixe externe (11) et prévu pour guider la course du volet (15) et verrouiller le volet (15) en position rétractée.

9. Inverseur de poussée (10) selon la revendication précédente, **caractérisé en ce que** l'organe d'accroche (18) est formé par un guide (18A) faisant saillie sur la surface externe (15B) du volet (15) et **en ce que** l'organe de réception (17) est formé par une rampe (17A) amenant le guide (18A) dans une cavité (17B) jusqu'à une position finale correspondant à la position rétractée du volet (15).

10. Inverseur de poussée (10) selon l'une quelconque des revendications précédentes, **caractérisé en ce que** les moyens de déviation (13) sont des moyens de déviation (13) mobiles avec le capot mobile (14), tels que des grilles de déviation mobiles.

11. Inverseur de poussée (10) selon la revendication précédente, **caractérisé en ce que**, le câble (20) passe par une première poulie de renvoi (21) et une deuxième poulie de renvoi (22) respectivement montée solidaire aux extrémités amont et aval des moyens de déviation (13) mobiles, et le câble (20) passant en outre dans une troisième poulie de renvoi (23) solidaire du volet (15).

12. Inverseur de poussée (10) selon l'une quelconque des revendications 1 à 9, **caractérisé en ce que** les moyens de déviation (13' ; 13") sont des moyens de déviation (13' ; 13") fixes par rapport à la structure fixe externe (11), tels que des grilles de déviation fixes.

13. Inverseur de poussée (10) selon la revendication précédente, **caractérisé en ce que**, le câble (20') est relié à une première extrémité (24') à l'aval des moyens de déviation (13') et à une deuxième extrémité (25') au capot mobile (14), et le câble (20') passe par une première poulie de renvoi (21') et une deuxième poulie de renvoi (22') respectivement montées solidaires de l'extrémité amont du capot mobile (14), et de l'extrémité amont du volet (15).

14. Inverseur de poussée (10) selon la revendication 12, **caractérisé en ce que** :
- le volet (15) est articulé en rotation par rapport à la structure fixe externe (11),
- le câble (20") est relié à une première extrémité (24") à l'amont des moyens de déviation (13") et à une deuxième extrémité (25") au capot mobile (14),
- le câble (20") passe par une première poulie de renvoi (21") et une deuxième poulie de renvoi (22") respectivement montées solidaires des extrémités amont et aval des moyens de déviation (13"), et le câble (20") passant en outre dans une troisième poulie de renvoi (23") solidaire du volet (15).

15. Nacelle (1) d'un aéronef équipé d'un inverseur de poussée (10) selon l'une quelconque des revendications précédentes.

## Patentansprüche

1. Schubumkehrvorrichtung (10) für eine Gondel (1) eines Turbostrahltriebwerks, der Umlenkmittel (13; 13'; 13") für mindestens einen Teil eines Luftstroms (F) des Turbostrahltriebwerks und mindestens eine Verkleidung (14), die in Bezug auf eine äußere feste Struktur (11) des Schubumkehrers translatorisch beweglich ist, umfasst, wobei der Schubumkehrer mindestens eine drehbar angelenkte Klappe (15) aufweist, wobei die bewegliche Verkleidung (14) dazu ausgelegt ist, abwechselnd aus einer Schließposition, in der sie die aerodynamische Kontinuität der Gondel (1) mit der Klappe (15) gewährleistet und die Umlenkmittel (13; 13'; 13") abdeckt, wobei sich die Klappe (15) in einer eingefahrenen Position befindet, in eine Öffnungsposition, in der sie einen Durchgang in der Gondel (1) öffnet und die Umlenkmittel (13; 13'; 13") freigibt, überzugehen, wobei die Klappe (15) einen Teil eines ringförmigen Kanals (7) der Gondel (1) blockiert, **dadurch gekennzeichnet, dass** er ein Seil-Rolle-System (20-25; 20'-25'; 20"-25") zum Antreiben der Klappe (15) umfasst,
wobei das Seil-Rolle-System (20-25; 20'-25'; 20"-25") mindestens ein Seil (20; 20'; 20") umfasst, das mit mindestens einer Rolle (21-23; 21'-22'; 21"-23") verbunden ist, um die Klappe (15) mit der Schubumkehrvorrichtung (10) zu verbinden.

2. Schubumkehrvorrichtung (10) nach dem vorhergehenden Anspruch, **dadurch gekennzeichnet, dass** das Seil-Rolle-System (20-25; 20'-25'; 20"-25") an der Schubumkehrvorrichtung (10) montiert ist, um das Seil (20; 20'; 20") zu spannen, wenn sich die Schubumkehrvorrichtung (10) in der Schließposition befindet, und das Seil (20; 20'; 20") freizugeben, wenn die Schubumkehrvorrichtung (10) mit ihrer Öffnungsposition beginnt, vorzugsweise bis in eine ausgefahrene Position der Klappe (15).

3. Schubumkehrvorrichtung (10) nach einem der vorhergehenden Ansprüche, **dadurch gekennzeichnet, dass** die Enden (24-25; 24'-25'; 24"-25") des Seils (20; 20'; 20") und mindestens eine Umlenkrolle (21-23; 21'-22'; 21"-23") des Seil-Rollen-Systems (20-25; 20'-25'; 20"-25") die feste Struktur (11), die bewegliche Verkleidung (14) und die Klappe (15) miteinander verbinden.

4. Schubumkehrvorrichtung (10) nach einem der vorhergehenden Ansprüche, **dadurch gekennzeichnet, dass** das Seil (20) des Seil-Rollen-Systems (20-25) an einem ersten Ende (24; 24'; 24") der äußeren festen Struktur (11) befestigt ist und es an einem anderen Ende (25; 25'; 25") an der beweglichen Verkleidung (14) befestigt ist.

5. Schubumkehrvorrichtung (10) nach einem der vorhergehenden Ansprüche, **dadurch gekennzeichnet, dass** die Klappe (15) an ihrem stromabwärtigen Ende angelenkt ist.

6. Schubumkehrvorrichtung (10) nach einem der vorhergehenden Ansprüche, **dadurch gekennzeichnet, dass** sie eine Torsionsfeder (16) der Klappe (15) umfasst, die vorzugsweise an einer Gelenkverbindung der Klappe (15) mit der Verkleidung (14) angeordnet ist.

7. Schubumkehrvorrichtung (10) nach einem der vorhergehenden Ansprüche, **dadurch gekennzeichnet, dass** die bewegliche Verkleidung (14) einen Anschlag (30) umfasst, der dazu vorgesehen ist, den Hub der Klappe (15) in ihrer ausgefahrenen Position, die der Öffnungsposition des Schubumkehrers (10) entspricht, zu begrenzen.

8. Schubumkehrvorrichtung (10) nach einem der vorhergehenden Ansprüche, **dadurch gekennzeichnet, dass** die Klappe (15) ein Hakenelement (18) umfasst, das dazu vorgesehen ist, mit einem Aufnahmeelement (17) der äußeren festen Struktur (11) in Eingriff zu kommen, und dazu vorgesehen ist, den Hub der Klappe (15) zu führen und die Klappe (15) in der eingefahrenen Position zu verriegeln.

9. Schubumkehrvorrichtung (10) nach dem vorhergehenden Anspruch, **dadurch gekennzeichnet, dass** das Hakenelement (18) durch eine Führung (18A) gebildet wird, die von einer äußeren Fläche (15B) der Klappe (15) hervorsteht, und dadurch, dass das Aufnahmeelement (17) durch eine Rampe (17A) gebildet wird, die die Führung (18A) in einem Hohlraum (17B) bis in eine Endposition bringt, die der eingefahrenen Position der Klappe (15) entspricht.

10. Schubumkehrvorrichtung (10) nach einem der vorhergehenden Ansprüche, **dadurch gekennzeichnet, dass** die Umlenkmittel (13) mit der beweglichen Verkleidung (14) bewegliche Umlenkmittel (13) sind, wie etwa bewegliche Umlenkgitter.

11. Schubumkehrvorrichtung (10) nach dem vorhergehenden Anspruch, **dadurch gekennzeichnet, dass** das Seil (20) durch eine erste Umlenkrolle (21) und eine zweite Umlenkrolle (22) verläuft, die fest an dem stromaufwärtigen bzw. dem stromabwärtigen Ende der beweglichen Umlenkmittel (13) montiert sind, und wobei das Seil (20) ferner durch eine dritte Umlenkrolle (23) verläuft, die an der Klappe (15) befestigt ist.

12. Schubumkehrvorrichtung (10) nach einem der Ansprüche 1 bis 9, **dadurch gekennzeichnet, dass** die Umlenkmittel (13'; 13") in Bezug auf die äußere feste Struktur (11) feste Umlenkmittel (13'; 13") sind, wie etwa feste Umlenkgitter.

13. Schubumkehrvorrichtung (10) nach dem vorhergehenden Anspruch, **dadurch gekennzeichnet, dass** das Seil (20') an einem ersten Ende (24') mit dem stromabwärtigen Ende der Umlenkmittel (13') und an einem zweiten Ende (25') mit der beweglichen Verkleidung (14) verbunden ist, und das Seil (20') durch eine erste Umlenkrolle (21') und eine zweite Umlenkrolle (22') verläuft, die fest an dem stromaufwärtigen Ende der beweglichen Verkleidung (14) bzw. dem stromaufwärtigen Ende der Klappe (15) montiert sind.

14. Schubumkehrvorrichtung (10) nach Anspruch 12, **dadurch gekennzeichnet, dass**:
- die Klappe (15) in Bezug auf die äußere feste Struktur (11) drehbar angelenkt ist,
- das Seil (20") an einem ersten Ende (24") mit einem stromaufwärtigen Ende der Umlenkmittel (13") und an einem zweiten Ende (25") mit der beweglichen Verkleidung (14) verbunden ist,
- das Seil (20") durch eine erste Umlenkrolle (21") und eine zweite Umlenkrolle (22") verläuft, die fest an dem stromaufwärtigen bzw. dem stromabwärtigen Ende der Umlenkmittel (13") montiert sind, und das Seil (20") ferner durch eine dritte Umlenkrolle (23") verläuft, die an der Klappe (15) befestigt ist.

15. Gondel (1) eines Flugzeugs, das mit einer Schubumkehrvorrichtung (10) nach einem der vorhergehenden Ansprüche ausgestattet ist.

## Claims

1. A thrust reverser (10) for a turbojet engine nacelle (1) comprising means (13; 13'; 13") for diverting at least a portion of an air flow (F) from the turbojet engine, and at least one cowl (14) movable in translation relative to an outer fixed structure (11) of the thrust reverser, the thrust reverser having at least one rotatably hinged flap (15), said movable cowl (14) being capable of moving alternately from a closure position in which it ensures the aerodynamic continuity of the nacelle (1) with the flap (15) and covers the diverting means (13; 13'; 13"), the flap (15) being in the retracted position, to an opening position in which it opens a passage in the nacelle (1) and uncovers the diverting means (13; 13'; 13"), the flap (15) obstructs a portion of an annular channel (7) of the nacelle (1), **characterized in that** it comprises a cable-pulley system (20-25; 20'-25'; 20"-25") for driving the flap (15), the cable-pulley system (20-25; 20'-25'; 20"-25") comprising at least one cable (20; 20'; 20") associated with at least one pulley (21-23; 21'-22'; 21"-23") to connect the flap (15) to the thrust reverser (10).

2. The thrust reverser (10) according to the preceding claim, **characterized in that** the cable-pulley system (20-25; 20'-25'; 20"-25") is mounted on the thrust reverser (10) so as to tension the cable (20; 20'; 20") when the thrust reverser (10) is in the closure position and release the cable (20; 20'; 20") when the thrust reverser (10) begins its opening phase, preferably up to a deployed position of the flap (15).

3. The thrust reverser (10) according to any one of the preceding claims, **characterized in that** the ends (24-25; 24'-25'; 24"-25") of the cable (20; 20'; 20") and at least one deflection pulley (21-23; 21'-22'; 21"-23") of the cable-pulley system (20-25; 20'-25'; 20"-25") link together the fixed structure (11), the movable cowl (14) and the flap (15).

4. The thrust reverser (10) according to any one of the preceding claims, **characterized in that** the cable (20) of the cable-pulley system (20-25) is secured, at a first end (24; 24'; 24"), to the outer fixed structure (11) and it is secured, at the other end (25; 25'; 25"), to the movable cowl (14).

5. The thrust reverser (10) according to any one of the preceding claims, **characterized in that** the flap (15) is hinged at its downstream end.

6. The thrust reverser (10) according to any one of the preceding claims, **characterized in that** it comprises a torsion spring (16) of the flap (15), preferably disposed at the hinge of the flap (15) with the cowl (14).

7. The thrust reverser (10) according to any one of the preceding claims, **characterized in that** the movable cowl (14) comprises a stop (30) provided to limit the stroke of the flap (15) to its deployed position corresponding to the opening position of the thrust reverser (10).

8. The thrust reverser (10) according to any one of the preceding claims, **characterized in that** the flap (15) comprises a hooking member (18) provided to be engaged with a receiving member (17) of the outer fixed structure (11) and provided to guide the stroke of the flap (15) and lock the flap (15) in the retracted position.

9. The thrust reverser (10) according to the preceding claim, **characterized in that** the hooking member (18) is formed by a guide (18A) protruding from the outer surface (15B) of the flap (15) and **in that** the receiving member (17) is formed by a ramp (17A) bringing the guide (18A) into a cavity (17B) up to a final position corresponding to the retracted position of the flap (15).

10. The thrust reverser (10) according to any one of the preceding claims, **characterized in that** the diverting means (13) are movable diverting means (13) with the movable cowl (14), such as movable cascade vanes.

11. The thrust reverser (10) according to the preceding claim, **characterized in that** the cable (20) passes through a first deflection pulley (21) and a second deflection pulley (22) respectively securely mounted to the upstream and downstream ends of the movable diverting means (13), and the cable (20) further passing through a third deflection pulley (23) secured to the flap (15).

12. The thrust reverser (10) according to any one of claims 1 to 9, **characterized in that** the diverting means (13'; 13") are diverting means (13'; 13") fixed relative to the outer fixed structure (11), such as fixed cascade vanes.

13. The thrust reverser (10) according to the preceding claim, **characterized in that** the cable (20') is connected at a first end (24') to the downstream of the diverting means (13') and at a second end (25') to the movable cowl (14), and the cable (20') passes through a first deflection pulley (21') and a second deflection pulley (22') respectively securely mounted to the upstream end of the movable cowl (14), and the upstream end of the flap (15).

14. The thrust reverser (10) according to claim 12, **characterized in that**:
- the flap (15) is rotatably hinged relative to the outer fixed structure (11),
- the cable (20") is connected at a first end (24") to the upstream of the diverting means (13") and at a second end (25") to the movable cowl (14),
- the cable (20") passes through a first deflection pulley (21") and a second deflection pulley (22") respectively securely mounted to the upstream and downstream ends of the diverting means (13"), and the cable (20") further passing through a third deflection pulley (23") secured to the flap (15).

15. A nacelle (1) of an aircraft equipped with a thrust reverser (10) according to any one of the preceding claims.
